# EUROPÄISCHE PATENTANMELDUNG

(11) **EP 4 567 460 A1**
(43) Veröffentlichungstag der Anmeldung: **11.06.2025**
(21) Anmeldenummer: 24212418.8
(22) Anmeldetag: 12.11.2024
(51) Int. Cl.: G01S 7/481

(54) **OPTOELEKTRONISCHER SENSOR**

(30) Priorität: 06.12.2023 DE 102023134195
(71) Anmelder: SICK AG, 79183 Waldkirch (DE)
(72) Erfinder: Döbele, Christian, 79341 Kenzingen (DE); Karle, Armin, 79283 Bollschweil (DE); Wiethege, Friedhelm, 79350 Sexau (DE)

(57) **Zusammenfassung**

Optoelektronischer Sensor (1) mit einem Gehäuse (2), mit einem Lichtsender (3), mit einem Lichtempfänger (4) und einer Frontscheibe (8), welche vor dem Lichtsender (3) und vor dem Lichtempfänger (4) angeordnet ist, wobei zugeordnet zu dem Lichtsender (3) und/oder zugeordnet zu dem Lichtempfänger (4) ein zylinderförmiges elastisches Ausgleichselement (5) angeordnet ist, wobei durch das zylinderförmige elastische Ausgleichselement (5) eine spaltfreie Abschirmung der Lichtstrahlen des Lichtsenders (3) und/oder der empfangenen Lichtstrahlen des Lichtempfängers (4) innerhalb des Gehäuses (2) erfolgt, wobei das zylinderförmige elastische Ausgleichselement (5) mit den jeweiligen Öffnungsrändern (6) spaltfrei an benachbarten Komponenten (7) anliegt, wobei das zylinderförmige elastische Ausgleichselement (5) hierzu unter Vorspannung elastisch eingespannt ist, wobei die Lichtstrahlen des Lichtsenders (3) und/oder die Lichtstrahlen für den Lichtempfänger (4) durch das zylinderförmige elastische Ausgleichselement (5) geführt sind.

## Beschreibung

Die vorliegende Erfindung betrifft einen optoelektronischen Sensor gemäß dem Oberbegriff von Anspruch 1.

Optoelektronische Sensorsysteme gemäß dem Stand der Technik weisen einen Lichtsender und einen Lichtempfänger in einem Gehäuse auf. Die ausgesendeten Lichtstrahlen des Lichtsenders werden auf ein Objekt gerichtet und reflektiertes Licht vom dem Lichtempfänger ausgewertet. Durch den Lichtsender und den Lichtempfänger wird ein Lichttaster gebildet. Befindet sich ein Objekt im Erfassungsbereich wird dies vom Lichtempfänger detektiert und ein Objektfeststellungssignal von dem Lichtempfänger erzeugt und ausgegeben.

Im Zusammenbau von optoelektronischen Sensoren ist eine sichere Trennung des Sendestrahls zum Empfangsstrahl erforderlich, um ein internes Übersprechen des Sendestrahls in den Empfangskanal zu unterbinden. Ein Sendestrahl soll hierbei nur durch ein Detektionstastgut oder einen Hintergrund in den Empfangskanal rückreflektiert werden.

Aufbaubedingt ergeben sich durch Teiletoleranzen und Prozesstoleranzen Restspalte, durch welche es zu diesen unerwünschten Effekten des Sende- und/oder Empfangspfadübersprechens kommen kann. Bei Lichtschranken und/oder Lichttastern ist dies bereits relevant.

Um das Übersprechen im Frontscheibenbereich zu unterbinden, sind beispielsweise Lösungen bekannt, bei welchen ein Senderohr durch die Frontscheibe hindurchgeführt wird.

Eine Frontscheibendurchführung stellt jedoch erhöhte Aufwände in Aufbau, Teile-/ und Prozesskosten dar und birgt die Gefahr von Dichtigkeitsproblemen im Übergang von Rohr zu Frontscheibe, selbst wenn diese beispielsweise mittels einer Ultraschallschweißung verbunden sind.

Eine Aufgabe der Erfindung besteht darin einen verbesserten optoelektronischen Sensor bereitzustellen, der eine verbesserte optische Abschirmung von Sendelichtpfad und/oder Empfangslichtpfad aufweist.

Die Aufgabe wird gemäß Anspruch 1 gelöst durch einen optoelektronischen Sensor mit einem Gehäuse, mit einem Lichtsender, mit einem Lichtempfänger und einer Frontscheibe, welche vor dem Lichtsender und vor dem Lichtempfänger angeordnet ist, wobei zugeordnet zu dem Lichtsender und/oder zugeordnet zu dem Lichtempfänger ein zylinderförmiges elastisches Ausgleichselement angeordnet ist, wobei durch das zylinderförmige elastische Ausgleichselement eine spaltfreie Abschirmung der Lichtstrahlen des Lichtsenders und/oder der empfangenen Lichtstrahlen des Lichtempfängers innerhalb des Gehäuses erfolgt, wobei das zylinderförmige elastische Ausgleichselement mit den jeweiligen Öffnungsrändern spaltfrei an benachbarten Komponenten anliegt, wobei das zylinderförmige elastische Ausgleichselement hierzu unter Vorspannung elastisch eingespannt ist, wobei die Lichtstrahlen des Lichtsenders und/oder die Lichtstrahlen für den Lichtempfänger durch das zylinderförmige elastische Ausgleichselement geführt sind.

Bei dem zylinderförmigen elastischen Ausgleichselement kann es sich synonym auch um ein schlauchförmiges oder rohrförmiges elastisches Ausgleichselement handeln. Insbesondere weist das elastische Ausgleichselement an jedem Ende eine Öffnung mit jeweils einem Öffnungsrand auf. Das elastische Ausgleichselement weist einen zylinderförmigen, schlauchförmigen oder rohrförmigen Körper auf mit einer Innenwand und einer Außenwand. Durch den zylinderförmigen, schlauchförmigen oder rohrförmigen Körper des elastischen Ausgleichselements sind die Lichtstrahlen geführt.

Der Begriff zylinderförmig ist hier allgemein aufzufassen. Zylinderförmig wird hier gleichbedeutend mit schlauchförmig verwendet. Es kann sich bei einem zylinderförmigen Körper speziell um einen kreiszylindrischen Körper handeln. Jedoch sind unter zylinderförmig auch andere geometrische Zylinderformen umfasst, die nicht kreiszylinderförmig sein müssen. Es kann sich dabei auch beispielsweise um eine schiefe Zylinderform handeln.

Durch den lichtdichten Abschluss der Öffnungsränder mit der benachbarten Komponente können Lichtstrahlen nicht innerhalb des Gehäuses vom Lichtsender zum Lichtempfänger gelangen. Dadurch ist eine Störlichtbeeinflussung des Lichtempfängers verhindert. Die Öffnungsränder liegen dabei beispielsweise plan oder flächig an der benachbarten Komponente an.

Das zylinderförmige, schlauchförmige oder rohrförmige elastische Ausgleichselement ist hierzu unter Vorspannung elastisch eingespannt. Die Vorspannung wird durch die Federeigenschaft des elastischen Ausgleichselements erzeugt. Dabei wird mindestens eine zum elastischen Ausgleichselement benachbarte Komponente gegen das elastische Ausgleichselement gedrückt, so dass das elastische Ausgleichselement leicht oder geringfügig zusammengedrückt bzw. zusammengepresst wird und so durch die damit erzeugte Vorspannung zwischen zwei Komponenten gehalten wird. Die jeweiligen Öffnungsränder liegen dabei jeweils an einer benachbarten Komponente, beispielsweise plan oder flächig an und bilden eine spaltfreie und lichtdichte Verbindung zwischen elastischem Ausgleichselement und Komponente.

Der optoelektronische Sensor weist beispielsweise das Gehäuse, eine Anschlussleitung, mindestens den Lichtsender, den Lichtempfänger und beispielsweise jeweils eine Optik zur Strahlformung auf. Weiter weist der optoelektronische Sensor beispielsweise eine Steuer- und Auswerteinheit zur Ansteuerung des Lichtsenders und Auswertung des Lichtempfängers auf.

Bei dem Lichtsender bzw. einem Lichtsenderelement kann es sich beispielsweise um eine Leuchtdiode oder eine Laserdiode handeln. Jedoch kann der Lichtsender auch beispielsweise eine Mehrzahl von Leuchtdioden oder Laserdioden aufweisen.

Bei dem Lichtempfänger bzw. einem Lichtempfangselement kann es sich beispielsweise um eine Photodiode oder einen Phototransistor handeln. Beispielsweise kann der Lichtempfänger durch mehrere Photodioden bzw. Phototransistoren gebildet sein, beispielsweise ein Photodiodenarray oder ähnliches sein.

Das elastische Ausgleichselement ist elastisch komprimierbar. Das bedeutet, dass das elastische Ausgleichselement aufgrund einer Beaufschlagung einer Druckkraft elastisch komprimiert wird. Das elastische Ausgleichselement besteht beispielsweise aus einem elastischen Material wie z.B. Gummi, Kautschuk, Synthesekautschuk, AcrylnitrilButadien-Kautschuk, Nitrilkautschuk, Ethylen-Propylen-Dien-Kautschuke, Silikon oder einem ähnlichen Werkstoff. Beispielsweise sind auch elastischen Kunststoffe wie z. B. thermoplastische Elastomere für das elastische Ausgleichselement vorgesehen.

Optoelektronische Sensoren werden für eine Vielzahl von Überwachungsaufgaben eingesetzt. Beispiele für solche Sensoren sind Lichtschranken. Weitere Beispiele solcher Sensoren sind Lichttaster oder Reflexionslichtschranken, bei denen ein Lichtsender einen Lichtstrahl aussendet, der reflektiert und von einem neben dem Lichtsender angeordneten Lichtempfänger aufgefangen wird.

In Weiterbildung der Erfindung ist der optoelektronische Sensor ein Lichtlaufzeitsensor. Lichtlaufzeitsensoren bestimmen eine Entfernung zu einem Objekt nach dem Prinzip des Lichtlaufzeitverfahrens.

Beispielsweise wird ein dem Lichtstrahl aufmoduliertes Sendemuster von einem Objekt reflektiert und nach Empfang in dem Sensor mit einem intern erzeugten Referenzmuster verglichen und die Lichtlaufzeit bestimmt. Daraus lässt sich der Lichtweg und damit auch der Abstand errechnen. In der Praxis werden im Wesentlichen zwei Verfahren angewandt. Bei dem einen Verfahren ist das Sendemuster ein einfacher Lichtpuls, dessen Laufzeit gemessen wird. Bei dem anderen Verfahren ist das Sendemuster eine Sinusmodulation, wobei die Phasenlage des Sinus gegenüber einem Referenzsinus modulo der Periode des Sinus der Laufzeit entspricht.

Insbesondere weist der Lichtempfänger mindestens eine Einzelphotonenlawinendiode auf. Einzelphotonenlawinendioden werden auch synonym als Single Photon Avalanche Diode` kurz SPAD bezeichnet. Andere gängige Bezeichnungen sind Silicon Photomultiplier` (SiPM) Geigermode Avalanche Photon Diode' oder Single Photon Counting Diode'. Einzelphotonenlawinendioden sind in Standard CMOS-Technologie realisierbare photoempfindliche Detektoren, die ähnlich wie Avalanche Photodioden einfallende Photonen in Strompulse konvertieren. Im Gegensatz zu Avalanche Photodioden werden Einzelphotonenlawinendioden jedoch über einer Durchbruchsspannung betrieben. Damit löst bereits ein einzelnes einfallendes Photon einen Lawineneffekt aus, der als Strompuls detektiert werden kann. Aufgrund der hohen Sensitivität, nämlich einem Verstärkungsfaktor von 10⁶ können bereits geringste Empfangsleistungen bis zu Einzelphotonen detektiert werden.

Zur Entfernungsmessung sind verschiedene Lichtlaufzeitverfahren mit einer entsprechenden Auswertung implementierbar.

Es kann ein Pulsverfahren vorgesehen sein. Beispielsweise sind ein oder mehrere Zeit-zu-Digital-Konverter (time-to-digital-converter) für das Pulsverfahren vorgesehen, in dem jedes Einzelphotonenereignis mit einem Zeitstempel versehen wird. Bei einem Nutzsignal treten daher mehrere Zeitstempel korreliert auf. Die Messwertgenerierung erfolgt statistisch. Hintergrundlicht erzeugt hingegen zufällig verteilte Zeitstempel.

Weiter kann ein CW-Verfahren (Continuous Wave) bzw. das synonyme Dauerstrich-Verfahren eingesetzt werden, wobei ein zeitlich konstantes Lichtsignal eingesetzt wird. Bei diesem Verfahren werden über ein Gating-Signal die Einzelphotonenevents in zwei Zähler verteilt und aus dem Verhältnis der Zählerstände eine Phase berechnet.

Weiter können analoge Signale eines Einzelphotonendiodenarrays ausgewertet werden. Diese werden mit einem Schwellwert verglichen, werden gesampelt oder werden mit statistischen Methoden ausgewertet.

Bei der Auswertung nach dem Lichtlaufzeitverfahren kann zusätzlich zum Abstandswert auch ein Amplitudenwert generiert werden, z. B. durch ein Histogramm der Zeitstempel, durch die Zählrate oder durch die Spannungsamplitude bei einer analogen Auswertung. Durch den Amplitudenwert kann eine Plausibilitätsprüfung, insbesondere bei sicherheitstechnischen Anwendungen durchgeführt werden.

Die Entfernungsmessung kann beispielsweise in der Fahrzeugsicherheit, der Logistik- oder Fabrikautomatisierung oder der Sicherheitstechnik benötigt werden. Insbesondere kann ein Entfernungsmesser, der auf einem reflektierten Lichtstrahl basiert, auf eine Entfernungsänderung des Reflektors oder des reflektierenden oder remittierenden Ziels reagieren. Eine besondere Anwendung ist eine entfernungsmessende Reflexionslichtschranke, bei welcher der Abstand zwischen Lichtsender und Reflektor überwacht wird.

Optisches Übersprechen zwischen einem Sende- und Empfangspfad eines optoelektronischen Sensors führt zu einer Beeinträchtigung der Performance des optoelektronischen Sensors. Daher müssen diese beiden Lichtpfade voneinander getrennt werden. Insbesondere ist eine Trennung von der Elektronikkarte, auf der sich Lichtsender und Lichtempfänger befinden, bis zur Frontscheibe notwendig.

In Weiterbildung der Erfindung liegt das zylinderförmige elastische Ausgleichselement an der Frontscheibe an und ist gegen die Frontscheibe gepresst. Dabei ist eine benachbarte Komponente durch die Frontscheibe gebildet. Die Öffnungsränder des elastischen Ausgleichselements liegen dabei beispielsweise plan oder flächig an der Frontscheibe an.

Das zylinderförmige elastische Ausgleichselement liegt dabei mit mindestens einem der Öffnungsränder spaltfrei an der benachbarten Frontscheibe an, wobei das zylinderförmige elastische Ausgleichselement hierzu unter Vorspannung elastisch eingespannt ist. Dadurch ist eine lichtdichte Verbindung zwischen der Frontscheibe und dem elastischen Ausgleichselement gebildet.

In Weiterbildung der Erfindung ist vor dem Lichtsender eine Sendeoptik angeordnet und/oder vor dem Lichtempfänger eine Empfangsoptik angeordnet. Durch die Sendeoptik bzw. die Empfangsoptik kann der Überwachungswinkel und verschiedene Reichweiten realisiert werden. Die Komponente kann beispielsweise auch durch die Sendeoptik und/oder Empfangsoptik gebildet sein.

In Weiterbildung der Erfindung ist ein Optikträger für den Lichtsender angeordnet und/oder ein Optikträger für den Lichtempfänger angeordnet und/oder ein Optikträger für den Lichtsender und den Lichtempfänger angeordnet, wobei der Optikträger für den Lichtsender zwischen Lichtsender und Frontscheibe angeordnet ist, der Optikträger für den Lichtempfänger zwischen dem Lichtempfänger und der Frontscheibe angeordnet ist und/oder der Optikträger für den Lichtsender und den Lichtempfänger zwischen dem Lichtsender, dem Lichtempfänger und der Frontscheibe angeordnet ist, wobei an dem Optikträger für den Lichtsender, an dem Optikträger für den Lichtempfänger und/oder an dem Optikträger für den Lichtsender und den Lichtempfänger das zylinderförmige elastische Ausgleichselement angeordnet ist. Dabei ist eine benachbarte Komponente durch den Optikträger gebildet.

Das zylinderförmige elastische Ausgleichselement liegt dabei mit mindestens einem der Öffnungsränder spaltfrei, beispielsweise plan oder flächig an dem benachbarten Optikträger an, wobei das zylinderförmige elastische Ausgleichselement hierzu unter Vorspannung elastisch eingespannt ist. Dadurch ist eine lichtdichte Verbindung zwischen dem Optikträger und dem elastischen Ausgleichselement gebildet.

Der Optikträger kann auch als Tubus bezeichnet werden. Der Optikträger ist vorzugsweise aus schwarzem und mattem Kunststoff hergestellt. Dadurch absorbiert der Optikträger unerwünschte Lichtstrahlen.

In Weiterbildung der Erfindung ist das elastische Ausgleichselement aus dunklem, insbesondere schwarzem Material gebildet und weist eine matte Oberfläche an mindestens einer Innenwand auf.

Neben der Toleranzeliminierung des Spalts zur benachbarten Komponente bzw. zur benachbarten Frontscheibe bietet das optisch matte, dunkle Material den Effekt Streulicht durch Mehrfachreflexionen zu vermindern. Dies führt sende-/ und empfangsseitig zu einem präziseren Lichtspot auf dem Detektionstarget wie auch auf dem Lichtempfänger bzw. einem Empfangselement.

In Weiterbildung der Erfindung weist das elastische Ausgleichselement eine Faltenbalgstruktur auf. Durch die Faltenbalgstruktur wird die Stauchung bzw. Komprimierung des elastischen Ausgleichselements mechanisch durchgeführt in dem die Faltenbalgstruktur zusammengedrückt wird.

Hier können verschiedene Linienführungen bzw. Strukturen sinnvoll sein. Insbesondere ist hier eine faltenbalgähnliche Struktur vorteilhaft. Theoretisch sind hier jedoch auch spezielle andere Formen denkbar. Voraussetzung ist jedoch, dass diese beim Einfedern nicht in die optischen Bereiche ausbrechen oder nach Innen klappen und den optischen Strahl beschneiden.

In Weiterbildung der Erfindung ist das zylinderförmige elastische Ausgleichselement im Querschnitt rund, eckig, oval, elliptisch oder weist eine Freiform auf. Dadurch kann das elastische Ausgleichselement an verschiedene notwendige Querschnitte angepasst werden.

Der Faltenbalg kann neben verschiedenen elastischen Materialien auch verschiedene geometrische Formen annehmen, je nach Erfordernis bez. Bauraumverfügbarkeit oder Kanaltrennung
Generell sind verschiedene Anordnungen denkbar. Hierbei kann ein Ein-Kanal oder mehrere verbundene Kanäle bereitgestellt werden.

In Weiterbildung der Erfindung weist das zylinderförmige elastische Ausgleichselement eine konische Form oder eine Kegelform auf. Dabei ist die konische Form oder Kegelform mit größer werdendem Querschnitt zur Frontscheibe hin angeordnet. Dadurch wird ein trichterförmiges elastisches Ausgleichselement gebildet, welches der Lichtstrahlform für den Lichtsender oder den Lichtempfänger angepasst ist.

In Weiterbildung der Erfindung ist das zylinderförmige elastische Ausgleichselement einstückig ausgebildet. Einstückig bedeutet, dass das elastische Ausgleichselement gemäß der Weiterbildung aus nur einem einzigen Stück besteht und nicht mehrteilig ausgebildet ist. Beispielsweise wird das elastische Ausgleichselement im Spritzgussverfahren hergestellt.

In Weiterbildung der Erfindung ist das zylinderförmige elastische Ausgleichselement stoffschlüssig mit der Frontscheibe verbunden.

Das zylinderförmige elastische Ausgleichselement liegt dabei mit mindestens einem der Öffnungsränder spaltfrei an der benachbarten Frontscheibe an, wobei das zylinderförmige elastische Ausgleichselement hierzu unter Vorspannung elastisch eingespannt ist. Dadurch ist eine lichtdichte Verbindung zwischen der Frontscheibe und dem elastischen Ausgleichselement stoffschlüssig gebildet. Beispielsweise ist das elastische Ausgleichselement und die Frontscheibe miteinander verklebt, verschweißt oder durch eine andere stoffschlüssige Verbindung miteinander verbunden.

In Weiterbildung der Erfindung ist das zylinderförmige elastische Ausgleichselement formschlüssig mit der Frontscheibe verbunden.

Das zylinderförmige elastische Ausgleichselement liegt dabei mit mindestens einem der Öffnungsränder spaltfrei an der benachbarten Frontscheibe an, wobei das zylinderförmige elastische Ausgleichselement hierzu unter Vorspannung elastisch eingespannt ist. Dadurch ist eine lichtdichte Verbindung zwischen der Frontscheibe und dem elastischen Ausgleichselement formschlüssig gebildet. Beispielsweise ist das elastische Ausgleichselement und die Frontscheibe mittels eines Hinterschnitts oder durch eine andere formschlüssige Verbindung miteinander verbunden.

In Weiterbildung der Erfindung ist das zylinderförmige elastische Ausgleichselement stoffschlüssig mit dem Optikträger verbunden.

Das zylinderförmige elastische Ausgleichselement liegt dabei mit mindestens einem der Öffnungsränder spaltfrei an den benachbarten Optikträgern an, wobei das zylinderförmige elastische Ausgleichselement hierzu unter Vorspannung elastisch eingespannt ist. Dadurch ist eine lichtdichte Verbindung zwischen den Optikträgern und dem elastischem Ausgleichselement stoffschlüssig gebildet. Beispielsweise sind das elastische Ausgleichselement und die Optikträger miteinander verklebt, verschweißt oder durch eine andere stoffschlüssige Verbindung miteinander verbunden.

In Weiterbildung der Erfindung ist das zylinderförmige elastische Ausgleichselement formschlüssig mit den Optikträgern verbunden.

Das zylinderförmige elastische Ausgleichselement liegt dabei mit mindestens einem der Öffnungsränder spaltfrei an den benachbarten Optikträgern an, wobei das zylinderförmige elastische Ausgleichselement hierzu unter Vorspannung elastisch eingespannt ist. Dadurch ist eine lichtdichte Verbindung zwischen den Optikträgern und dem elastischem Ausgleichselement formschlüssig gebildet. Beispielsweise sind das elastische Ausgleichselement und die Optikträger mittels eines Hinterschnitts oder durch eine andere formschlüssige Verbindung miteinander verbunden.

In Weiterbildung der Erfindung ist das zylinderförmige elastische Ausgleichselement stoffschlüssig mit einer Leiterplatte verbunden, wobei auf der Leiterplatte der Lichtsender und der Lichtempfänger angeordnet ist. Die benachbarte Komponente ist dabei durch die Leiterplatte bzw. eine Leiterkarte gebildet.

Beispielsweise sind Lichtsender und Lichtempfänger auf einer gemeinsamen Platine angeordnet. Auf diese Weise haben Lichtsender und Lichtempfänger einen wohldefinierten Abstand zueinander, der eine sehr geringe Toleranz aufweist.

Das zylinderförmige elastische Ausgleichselement liegt dabei mit mindestens einem der Öffnungsränder spaltfrei an der benachbarten Leiterplatte an, wobei das zylinderförmige elastische Ausgleichselement hierzu unter Vorspannung elastisch eingespannt ist. Dadurch ist eine lichtdichte Verbindung zwischen der Leiterplatte und dem elastischen Ausgleichselement stoffschlüssig gebildet. Beispielsweise sind das elastische Ausgleichselement und die Leiterplatte miteinander verklebt, verschweißt oder durch eine andere stoffschlüssige Verbindung miteinander verbunden.

In Weiterbildung der Erfindung ist das zylinderförmige elastische Ausgleichselement formschlüssig mit einer Leiterplatte verbunden, wobei auf der Leiterplatte der Lichtsender und der Lichtempfänger angeordnet ist. Die benachbarte Komponente ist dabei durch die Leiterplatte bzw. eine Leiterkarte gebildet.

Beispielsweise sind Lichtsender und Lichtempfänger auf einer gemeinsamen Platine angeordnet. Auf diese Weise haben Lichtsender und Lichtempfänger einen wohldefinierten Abstand zueinander, der eine sehr geringe Toleranz aufweist.

Das zylinderförmige elastische Ausgleichselement liegt dabei mit mindestens einem der Öffnungsränder spaltfrei an der benachbarten Leiterplatte an, wobei das zylinderförmige elastische Ausgleichselement hierzu unter Vorspannung elastisch eingespannt ist. Dadurch ist eine lichtdichte Verbindung zwischen der Leiterplatte und dem elastischen Ausgleichselement formschlüssig gebildet. Beispielsweise sind das elastische Ausgleichselement und die Leiterplatte mittels eines Hinterschnitts oder durch eine andere formschlüssige Verbindung miteinander verbunden.

In Weiterbildung der Erfindung weist das zylinderförmige elastische Ausgleichselement eine integrierte Blende auf.

In das elastische Ausgleichselement kann bei Bedarf auch eine optische Blende integriert sein. Die Blende kann hierbei direkt in das Basismaterial des elastischen Ausgleichselements integriert sein, oder als zweite Komponenten bzw. als Einlegeteil (z.B. Kunststoff-/ oder Metallteil Blende) beim einem Spritz-/Vulkanisationsprozess verbunden werden.

Durch die direkt integrierte Blende ist eine spätere separate Montage nicht mehr erforderlich und kann so auch wirtschaftliche und toleranztechnische Vorteile bieten.

In Weiterbildung der Erfindung ist das zylinderförmige elastische Ausgleichselement zwischen der Leiterplatte und dem Optikträger angeordnet. Dabei bilden die Leiterplatte und der Optikträger jeweils benachbarte Komponenten.

Das zylinderförmige elastische Ausgleichselement liegt dabei mit mindestens einem der Öffnungsränder spaltfrei an der benachbarten Leiterplatte an, wobei das zylinderförmige elastische Ausgleichselement hierzu unter Vorspannung elastisch eingespannt ist. Das zylinderförmige elastische Ausgleichselement liegt dabei mit dem anderen Öffnungsrand spaltfrei an dem benachbarten Optikträger an.

Dabei ist das elastische Ausgleichselement auch rückseitig zum optischen Sender/ Empfänger anordbar.

Hierbei stützt sich das Ausgleichselement am optischen Tubus bzw. dem Optikträger ab und dichtet die Sende-/ Empfangskanäle zur Leiterplattenoberfläche ab.

Dies kann besonders vorteilhaft sein, falls die Abdichtung nicht auf einer planaren Fläche, sondern z.B. auf einem bedingt definierten Verguss z.B. Globtop-Verguss von gebondeten Bauteilen, erfolgen muss. Das elastische Ausgleichselement ermöglicht in gewissem Rahmen eine variable Abdichtung auf eine unebene Fläche/Struktur.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Figur 1 bis 4: jeweils einen optoelektronischen Sensor;
- Figur 5: jeweils verschiedene Querschnitte eines elastischen Ausgleichselements;
- Figur 6 bis 7: jeweils einen Längsschnitt jeweils eines elastischen Ausgleichselements mit Faltenbalgstruktur;
- Figur 8: eine Wand eines elastischen Ausgleichselements mit Faltenbalgstruktur;
- Figur 9: ein elastisches Ausgleichselement mit Faltenbalgstruktur;
- Figur 10: ein elastisches Ausgleichselement mit zwei benachbarten Lichtkanälen mit Faltenbalgstruktur;
- Figur 11: ein elastisches Ausgleichselement mit zwei benachbarten Lichtkanälen mit Faltenbalgstruktur mit einem Zwischenraum;
- Figur 12: einen optoelektronischen Sensor;
- Figur 13 bis 16: jeweils eine Leiterplatte mit elastischen Ausgleichselementen;
- Figur 17 bis 20: jeweils ein Optikträger mit elastischen Ausgleichselementen;

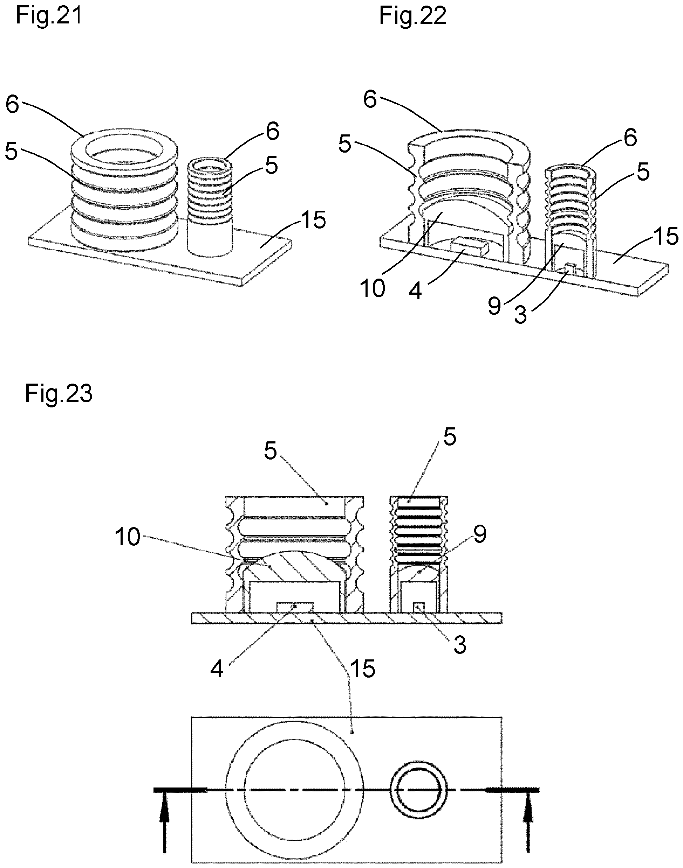

- Figur 21 bis 23: jeweils eine Leiterplatte mit elastischen Ausgleichselementen;

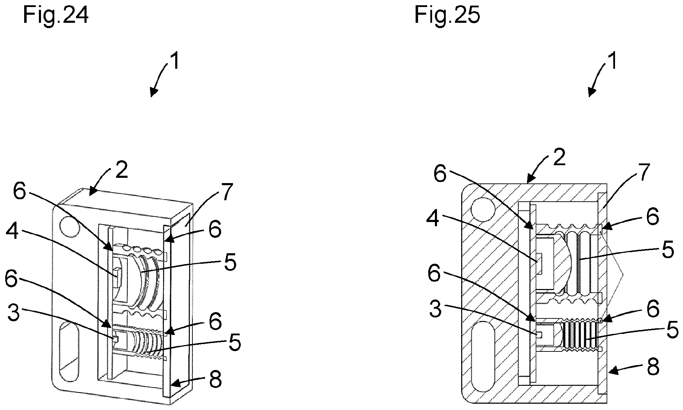

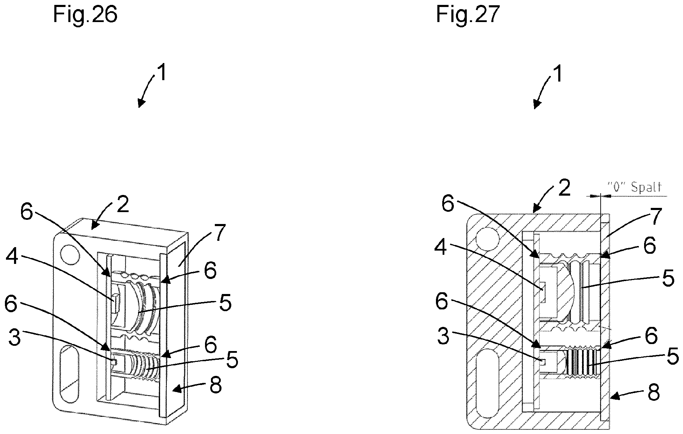

- Figur 24 bis 27: jeweils einen optoelektronischen Sensor;
- Figur 28 bis 31: jeweils ein elastisches Ausgleichselement mit einer Blende;
- Figur 32 bis 35: jeweils eine Leiterplatte mit elastischen Ausgleichselementen und einem Optikträger;

In den nachfolgenden Figuren sind identische Teile mit identischen Bezugszeichen versehen.

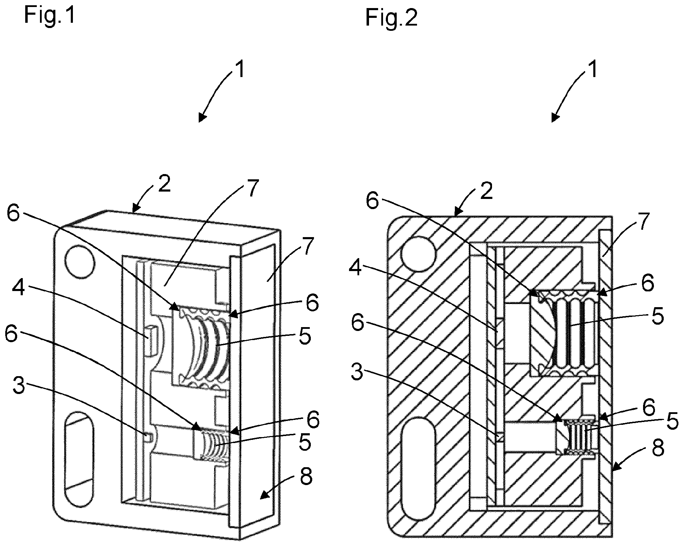

Figur 1 zeigt einen optoelektronischen Sensor 1 mit einem Gehäuse 2, mit einem Lichtsender 3, mit einem Lichtempfänger 4 und einer Frontscheibe 8, welche vor dem Lichtsender 3 und vor dem Lichtempfänger 4 angeordnet ist, wobei zugeordnet zu dem Lichtsender 3 und/oder zugeordnet zu dem Lichtempfänger 4 ein zylinderförmiges elastisches Ausgleichselement 5 angeordnet ist, wobei durch das zylinderförmige elastische Ausgleichselement 5 eine spaltfreie Abschirmung der Lichtstrahlen des Lichtsenders 3 und/oder der empfangenen Lichtstrahlen des Lichtempfängers 4 innerhalb des Gehäuses 2 erfolgt, wobei das zylinderförmige elastische Ausgleichselement 5 mit den jeweiligen Öffnungsrändern 6 spaltfrei an benachbarten Komponenten 7 anliegt, wobei das zylinderförmige elastische Ausgleichselement 5 hierzu unter Vorspannung elastisch eingespannt ist, wobei die Lichtstrahlen des Lichtsenders 3 und/oder die Lichtstrahlen für den Lichtempfänger 4 durch das zylinderförmige elastische Ausgleichselement 5 geführt sind.

Figur 2 ist eine ergänzende Querschnittsdarstellung zu Figur 1.

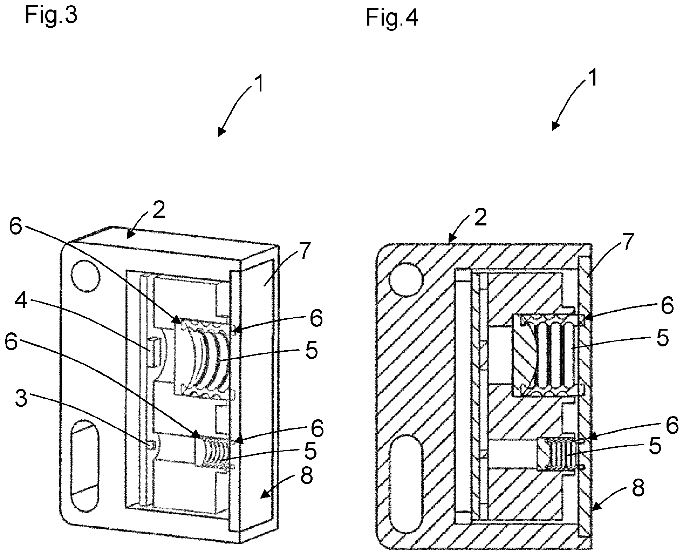

Figur 3 und Figur 4 zeigen jeweils das elastische Ausgleichselement 5 in einer nicht komprimierten Darstellung. Hier ist die Frontscheibe 8 als Komponente 7 lediglich dazu dargestellt, um das nicht komprimierte elastische Ausgleichselement 5 besser darzustellen.

Bei dem zylinderförmigen elastischen Ausgleichselement 5 kann es sich synonym auch um ein schlauchförmiges oder rohrförmiges elastisches Ausgleichselement 5 handeln. Insbesondere weist das elastische Ausgleichselement 5 an jedem Ende eine Öffnung mit jeweils einem Öffnungsrand 6 auf. Das elastische Ausgleichselement 5 weist einen zylinderförmigen, schlauchförmigen oder rohrförmigen Körper auf mit einer Innenwand 13 und einer Außenwand. Durch den zylinderförmigen, schlauchförmigen oder rohrförmigen Körper des elastischen Ausgleichselements 5 sind die Lichtstrahlen geführt.

Durch den lichtdichten Abschluss der Öffnungsränder 6 mit der benachbarten Komponente 7 können Lichtstrahlen nicht innerhalb des Gehäuses 2 vom Lichtsender 3 zum Lichtempfänger 4 gelangen. Dadurch ist eine Störlichtbeeinflussung des Lichtempfängers 4 verhindert.

Das zylinderförmige, schlauchförmige oder rohrförmige elastische Ausgleichselement 5 ist hierzu unter Vorspannung elastisch eingespannt. Die Vorspannung wird durch die Federeigenschaft des elastischen Ausgleichselements 5 erzeugt. Dabei wird mindestens eine zum elastischen Ausgleichselement 5 benachbarte Komponente 7 gegen das elastische Ausgleichselement 5 gedrückt, so dass das elastische Ausgleichselement 5 leicht oder geringfügig zusammengedrückt bzw. zusammengepresst wird und so durch die damit erzeugte Vorspannung zwischen zwei Komponenten 7 gehalten wird. Die jeweiligen Öffnungsränder 6 liegen dabei jeweils an einer benachbarten Komponente 7 an und bilden eine spaltfreie und lichtdichte Verbindung zwischen elastischem Ausgleichselement 5 und Komponente 7.

Der optoelektronische Sensor 1 weist beispielsweise das Gehäuse 2, eine Anschlussleitung, mindestens den Lichtsender 3, den Lichtempfänger 4 und beispielsweise jeweils eine Optik zur Strahlformung auf. Weiter weist der optoelektronische Sensor 1 beispielsweise eine Steuer- und Auswerteinheit zur Ansteuerung des Lichtsenders 3 und Ansteuerung und Auswertung des Lichtempfängers 4 auf. Bei der Komponente 7 kann es sich beispielsweise auch um eine Optik handeln.

Bei dem Lichtsender 3 bzw. einem Lichtsenderelement kann es sich beispielsweise um eine Leuchtdiode oder eine Laserdiode handeln. Bei dem Lichtempfänger 4 bzw. einem Lichtempfangselement kann es sich beispielsweise um eine Photodiode oder einen Phototransistor handeln.

Das elastische Ausgleichselement 5 ist elastisch komprimierbar. Das bedeutet, dass das elastische Ausgleichselement 5 aufgrund einer Beaufschlagung einer Druckkraft elastisch komprimiert wird.

Beispielsweise ist der optoelektronische Sensor 1 ein Lichtlaufzeitsensor. Lichtlaufzeitsensoren bestimmen eine Entfernung zu einem Objekt nach dem Prinzip des Lichtlaufzeitverfahrens.

Beispielsweise wird ein dem Lichtstrahl aufmoduliertes Sendemuster von einem Objekt reflektiert und nach Empfang in dem optoelektronischen Sensor 1 mit einem intern erzeugten Referenzmuster verglichen und die Lichtlaufzeit bestimmt. Daraus lässt sich der Lichtweg und damit auch der Abstand errechnen. Insbesondere weist der Lichtempfänger 4 mindestens eine Einzelphotonenlawinendiode auf. Einzelphotonenlawinendioden werden auch synonym als Single Photon Avalanche Diode' kurz SPAD bezeichnet.

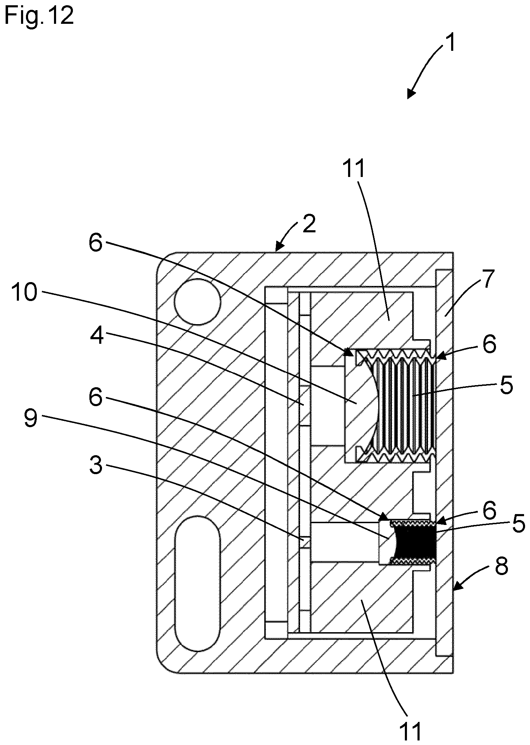

Gemäß Figur 12 liegt das zylinderförmige elastische Ausgleichselement 5 an der Frontscheibe 8 an und ist gegen die Frontscheibe 8 gepresst. Dabei ist eine benachbarte Komponente 7 durch die Frontscheibe 8 gebildet.

Das zylinderförmige elastische Ausgleichselement 5 liegt dabei mit mindestens einem der Öffnungsränder 6 spaltfrei an der benachbarten Frontscheibe 8 an, wobei das zylinderförmige elastische Ausgleichselement 5 hierzu unter Vorspannung elastisch eingespannt ist.

Gemäß Figur 12 ist vor dem Lichtsender 3 eine Sendeoptik 9 angeordnet und/oder vor dem Lichtempfänger 4 eine Empfangsoptik 10 angeordnet. Bei der Komponente 7 kann es sich beispielsweise auch um die Sendeoptik 9 und/oder die Empfangsoptik 10 handeln.

Beispielsweise ist ein Optikträger 11 für den Lichtsender 3 angeordnet und/oder ein Optikträger 11 für den Lichtempfänger 4 angeordnet und/oder ein Optikträger 11 für den Lichtsender 3 und den Lichtempfänger 4 angeordnet, wobei der Optikträger 11 für den Lichtsender 3 zwischen Lichtsender 3 und Frontscheibe 8 angeordnet ist, der Optikträger 11 für den Lichtempfänger 4 zwischen dem Lichtempfänger 4 und der Frontscheibe 8 angeordnet ist und/oder der Optikträger 11 für den Lichtsender 3 und den Lichtempfänger 4 zwischen dem Lichtsender 3, dem Lichtempfänger 4 und der Frontscheibe 8 angeordnet ist, wobei an dem Optikträger 11 für den Lichtsender 3, an dem Optikträger 11 für den Lichtempfänger 4 und/oder an dem Optikträger 11 für den Lichtsender 3 und den Lichtempfänger 4 das zylinderförmige elastische Ausgleichselement 5 angeordnet ist. Dabei ist eine benachbarte Komponente 7 durch den Optikträger 11 gebildet.

Das zylinderförmige elastische Ausgleichselement 5 liegt dabei mit mindestens einem der Öffnungsränder 6 spaltfrei an dem benachbarten Optikträger 11 an, wobei das zylinderförmige elastische Ausgleichselement 5 hierzu unter Vorspannung elastisch eingespannt ist.

Der Optikträger 11 kann auch als Tubus bezeichnet werden. Der Optikträger 11 ist vorzugsweise aus schwarzem und mattem Kunststoff hergestellt. Dadurch absorbiert der Optikträger 11 unerwünschte Lichtstrahlen.

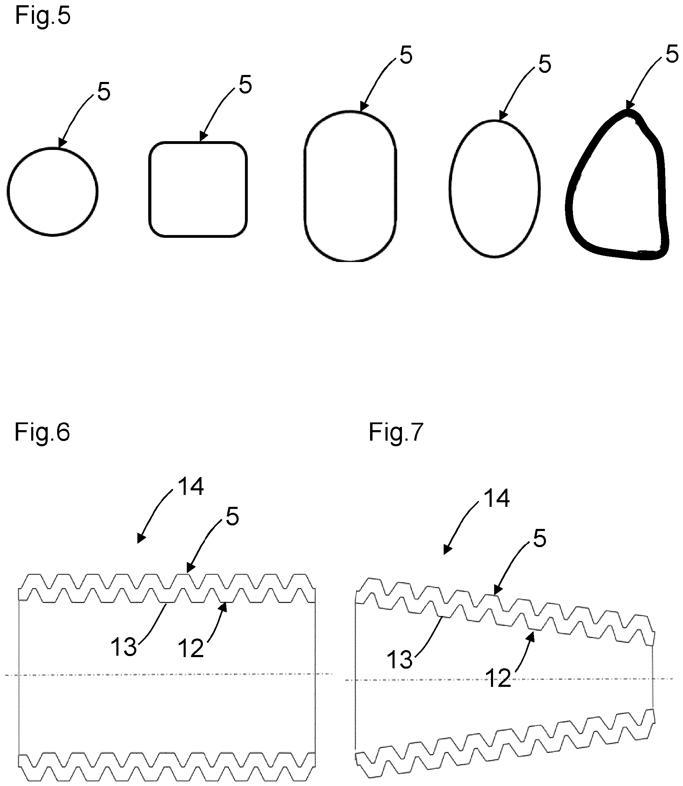

Beispielsweise ist das elastische Ausgleichselement 5 gemäß Figur 6 und 7 aus dunklem, insbesondere schwarzem Material gebildet und weist eine matte Oberfläche 12 an mindestens einer Innenwand 13 auf.

Neben der Toleranzeliminierung des Spalts zur benachbarten Komponente 7 bzw. zur benachbarten Frontscheibe 8 bietet das optisch matte, dunkle Material den Effekt Streulicht durch Mehrfachreflexionen zu vermindern.

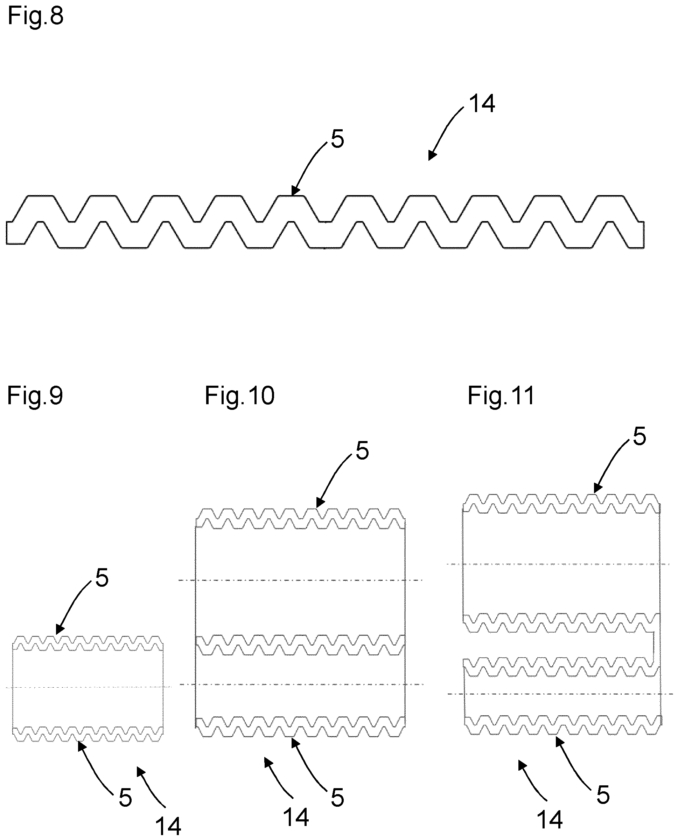

Gemäß Figur 6 bis 11 weist das elastische Ausgleichselement 5 eine Faltenbalgstruktur 14 auf. Durch die Faltenbalgstruktur 14 wird die Stauchung bzw. Komprimierung des elastischen Ausgleichselements 5 mechanisch durchgeführt indem die Faltenbalgstruktur 14 zusammengedrückt wird.

Gemäß Figur 5 ist das zylinderförmige elastische Ausgleichselement 5 im Querschnitt rund, eckig, oval, elliptisch oder weist eine Freiform auf. Dadurch kann das elastische Ausgleichselement 5 an verschiedene notwendige Querschnitte angepasst werden.

Das elastische Ausgleichselement 5 kann neben verschiedenen elastischen Materialien auch verschiedene geometrische Formen annehmen, je nach Erfordernis bez. Bauraumverfügbarkeit oder Kanaltrennung

Generell sind verschiedene Anordnungen denkbar. Hierbei kann ein Ein-Kanal oder mehrere verbundene Kanäle bereitgestellt werden.

Gemäß Figur 7 weist das zylinderförmige elastische Ausgleichselement 5 eine konische Form oder eine Kegelform auf. Dabei ist die konische Form oder Kegelform mit größer werdendem Querschnitt zur Frontscheibe 8 hin angeordnet. Dadurch wird ein trichterförmiges elastisches Ausgleichselement 5 gebildet, welches der Lichtstrahlform für den Lichtsender 3 oder den Lichtempfänger 4 angepasst ist.

Gemäß Figur 6, 7 und 9 bis 11 ist das zylinderförmige elastische Ausgleichselement 5 einstückig ausgebildet. Einstückig bedeutet, dass das elastische Ausgleichselement 5 gemäß der Weiterbildung aus nur einem einzigen Stück besteht und nicht mehrteilig ausgebildet ist.

Beispielsweise ist das zylinderförmige elastische Ausgleichselement 5 stoffschlüssig mit der Frontscheibe 8 verbunden.

Das zylinderförmige elastische Ausgleichselement 5 liegt dabei mit mindestens einem der Öffnungsränder 6 spaltfrei an der benachbarten Frontscheibe 8 an, wobei das zylinderförmige elastische Ausgleichselement 5 hierzu unter Vorspannung elastisch eingespannt ist. Beispielsweise sind das elastische Ausgleichselement 5 und die Frontscheibe 8 miteinander verklebt, verschweißt oder durch eine andere stoffschlüssige Verbindung miteinander verbunden.

Beispielsweise ist das zylinderförmige elastische Ausgleichselement 5 formschlüssig mit der Frontscheibe 8 verbunden.

Das zylinderförmige elastische Ausgleichselement 5 liegt dabei mit mindestens einem der Öffnungsränder 6 spaltfrei an der benachbarten Frontscheibe 8 an, wobei das zylinderförmige elastische Ausgleichselement 5 hierzu unter Vorspannung elastisch eingespannt ist. Beispielsweise sind das elastische Ausgleichselement 5 und die Frontscheibe 8 mittels eines Hinterschnitts oder durch eine andere formschlüssige Verbindung miteinander verbunden.

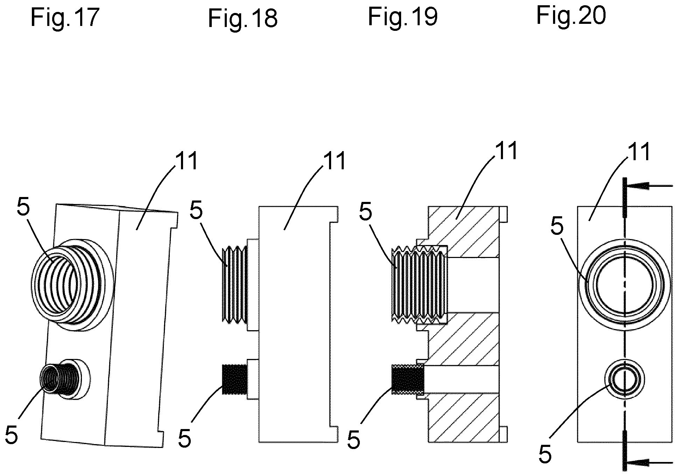

Gemäß Figur 17 bis 20 ist das zylinderförmige elastische Ausgleichselement 5 mit dem Optikträger 11 verbunden. Beispielsweise ist das zylinderförmige elastische Ausgleichselement 5 stoffschlüssig mit dem Optikträger 11 verbunden.

Das zylinderförmige elastische Ausgleichselement 5 liegt dabei mit mindestens einem der Öffnungsränder 6 spaltfrei an dem benachbarten Optikträger 11 an, wobei das zylinderförmige elastische Ausgleichselement 5 hierzu unter Vorspannung elastisch eingespannt ist. Beispielsweise sind das elastische Ausgleichselement 5 und die Optikträger 11 miteinander verklebt, verschweißt oder durch eine andere stoffschlüssige Verbindung miteinander verbunden.

Beispielsweise ist das zylinderförmige elastische Ausgleichselement 5 formschlüssig mit dem Optikträger 11 verbunden.

Das zylinderförmige elastische Ausgleichselement 5 liegt dabei mit mindestens einem der Öffnungsränder 6 spaltfrei an dem benachbarten Optikträger 11 an, wobei das zylinderförmige elastische Ausgleichselement 5 hierzu unter Vorspannung elastisch eingespannt ist.

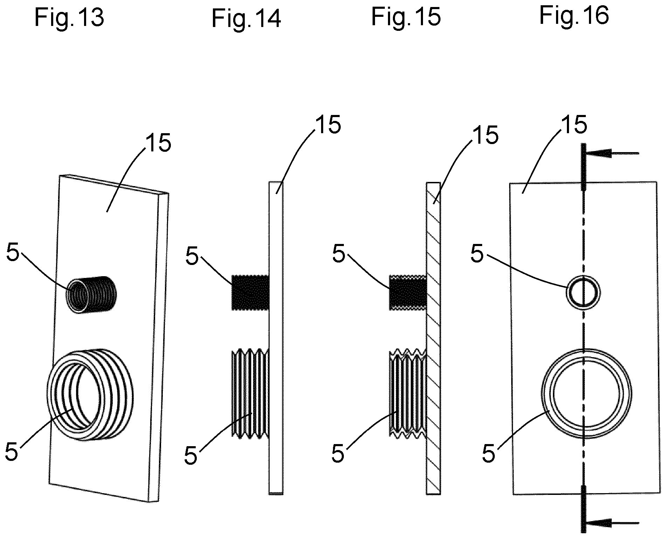

Gemäß Figur 13 bis 16 ist das zylinderförmige elastische Ausgleichselement 5 stoffschlüssig mit einer Leiterplatte 15 verbunden, wobei auf der Leiterplatte 15 der Lichtsender 3 und der Lichtempfänger 4 angeordnet ist. Die benachbarte Komponente 7 ist dabei durch die Leiterplatte 15 bzw. eine Leiterkarte gebildet.

Beispielsweise sind Lichtsender 3 und Lichtempfänger 4 auf einer gemeinsamen Platine bzw. Leiterplatte 15 angeordnet. Auf diese Weise haben Lichtsender 3 und Lichtempfänger 4 einen wohldefinierten Abstand zueinander, der eine sehr geringe Toleranz aufweist.

Das zylinderförmige elastische Ausgleichselement 5 liegt dabei mit mindestens einem der Öffnungsränder 6 spaltfrei an der benachbarten Leiterplatte 15 an, wobei das zylinderförmige elastische Ausgleichselement 5 hierzu unter Vorspannung elastisch eingespannt ist. Beispielsweise sind das elastische Ausgleichselement 5 und die Leiterplatte 15 miteinander verklebt, verschweißt oder durch eine andere stoffschlüssige Verbindung miteinander verbunden.

Beispielsweise ist das zylinderförmige elastische Ausgleichselement 5 formschlüssig mit einer Leiterplatte 15 verbunden, wobei auf der Leiterplatte 15 der Lichtsender 3 und der Lichtempfänger 4 angeordnet ist. Die benachbarte Komponente 7 ist dabei durch die Leiterplatte 15 bzw. eine Leiterkarte gebildet.

Das zylinderförmige elastische Ausgleichselement 5 liegt dabei mit mindestens einem der Öffnungsränder 6 spaltfrei an der benachbarten Leiterplatte 15 an, wobei das zylinderförmige elastische Ausgleichselement 5 hierzu unter Vorspannung elastisch eingespannt ist. Beispielsweise sind das elastische Ausgleichselement 5 und die Leiterplatte 15 mittels eines Hinterschnitts oder durch eine andere formschlüssige Verbindung miteinander verbunden.

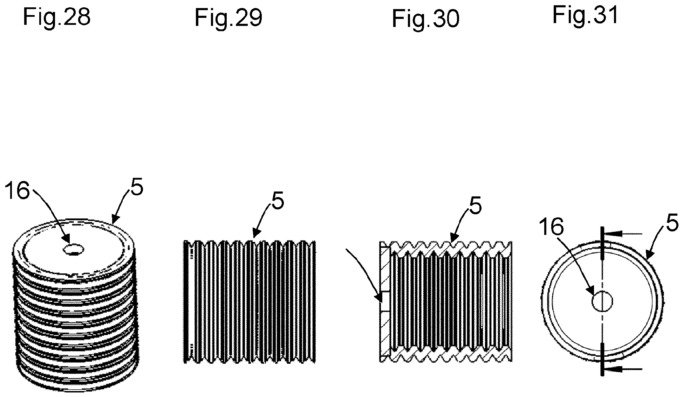

Gemäß Figur 28 bis 31 weist das zylinderförmige elastische Ausgleichselement 5 eine integrierte Blende 16 auf.

In das elastische Ausgleichselement 5 kann bei Bedarf auch eine optische Blende 16 integriert sein. Die Blende 16 kann hierbei direkt in das Basismaterial des elastischen Ausgleichselements 5 integriert sein, oder als zweite Komponente bzw. als Einlegeteil (z.B. Kunststoff-/ oder Metallteil Blende) bei einem Spritz-/Vulkanisationsprozess verbunden werden.

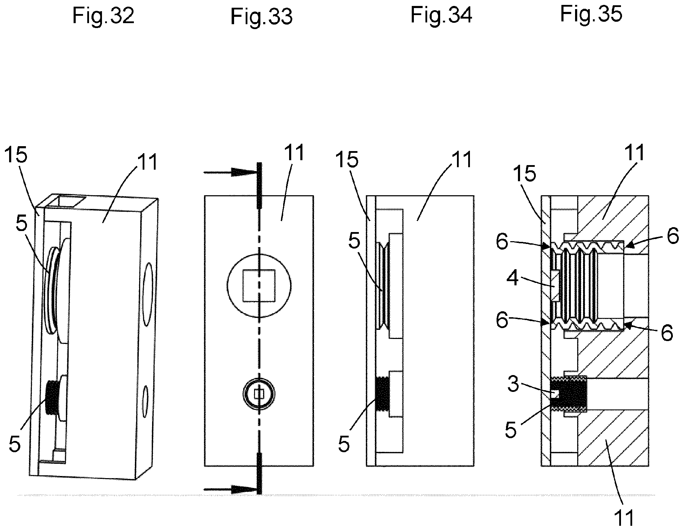

Gemäß Figur 32 bis 35 ist das zylinderförmige elastische Ausgleichselement 5 zwischen der Leiterplatte 15 und dem Optikträger 11 angeordnet. Dabei bilden die Leiterplatte 15 und der Optikträger 11 jeweils benachbarte Komponenten 7.

Das zylinderförmige elastische Ausgleichselement 5 liegt dabei mit mindestens einem der Öffnungsränder 6 spaltfrei an der benachbarten Leiterplatte 15 an, wobei das zylinderförmige elastische Ausgleichselement 5 hierzu unter Vorspannung elastisch eingespannt ist. Das zylinderförmige elastische Ausgleichselement 5 liegt dabei mit dem anderen Öffnungsrand 6 spaltfrei an dem benachbarten Optikträger 11 an.

Dabei ist das elastische Ausgleichselement 5 auch rückseitig zum optischen Sender/ Empfänger anordbar.

Hierbei stützt sich das Ausgleichselement 5 am optischen Tubus bzw. dem Optikträger 11 ab und dichtet die Sende-/ Empfangskanäle zur Leiterplattenoberfläche ab.

Dies kann besonders vorteilhaft sein, falls die Abdichtung nicht auf einer planaren Fläche, sondern z.B. auf einem bedingt definierten Verguss z.B. Globtop-Verguss von gebondeten Bauteilen, erfolgen muss. Das elastische Ausgleichselement 5 ermöglicht in gewissen Rahmen eine variable Abdichtung auf eine unebene Fläche/Struktur.

### Bezugszeichen:

1 optoelektronischer Sensor
2 Gehäuse
3 Lichtsender
4 Lichtempfänger
5 zylinderförmiges elastisches Ausgleichselement
6 Öffnungsränder
7 Komponenten
8 Frontscheibe
9 Sendeoptik
10 Empfangsoptik
11 Optikträger
12 matte Oberfläche
13 Innenwand
14 Faltenbalgstruktur
15 Leiterplatte
16 Blende

## Patentansprüche

1. Optoelektronischer Sensor (1) mit einem Gehäuse (2), mit einem Lichtsender (3), mit einem Lichtempfänger (4) und einer Frontscheibe (8), welche vor dem Lichtsender (3) und vor dem Lichtempfänger (4) angeordnet ist,
**dadurch gekennzeichnet, dass**
zugeordnet zu dem Lichtsender (3) und/oder zugeordnet zu dem Lichtempfänger (4) ein zylinderförmiges elastisches Ausgleichselement (5) angeordnet ist, wobei durch das zylinderförmige elastische Ausgleichselement (5) eine spaltfreie Abschirmung der Lichtstrahlen des Lichtsenders (3) und/oder der empfangenen Lichtstrahlen des Lichtempfängers (4) innerhalb des Gehäuses (2) erfolgt, wobei das zylinderförmige elastische Ausgleichselement (5) mit den jeweiligen Öffnungsrändern (6) spaltfrei an benachbarten Komponenten (7) anliegt, wobei das zylinderförmige elastische Ausgleichselement (5) hierzu unter Vorspannung elastisch eingespannt ist, wobei die Lichtstrahlen des Lichtsenders (3) und/oder die Lichtstrahlen für den Lichtempfänger (4) durch das zylinderförmige elastische Ausgleichselement (5) geführt sind.

2. Optoelektronischer Sensor (1) nach Anspruch 1, **dadurch gekennzeichnet, dass** der optoelektronische Sensor (1) ein Lichtlaufzeitsensor ist.

3. Optoelektronischer Sensor (1) nach einem der vorhergehenden Ansprüche,
**dadurch gekennzeichnet, dass** das zylinderförmige elastische Ausgleichselement (5) an der Frontscheibe (8) anliegt und gegen die Frontscheibe (8) gepresst ist.

4. Optoelektronischer Sensor (1) nach einem der vorhergehenden Ansprüche,
**dadurch gekennzeichnet, dass** vor dem Lichtsender (3) eine Sendeoptik (9) angeordnet ist und/oder vor dem Lichtempfänger (4) eine Empfangsoptik (10) angeordnet ist.

5. Optoelektronischer Sensor (1) nach einem der vorhergehenden Ansprüche,
**dadurch gekennzeichnet, dass** ein Optikträger (11) für den Lichtsender (3) angeordnet ist und/oder ein Optikträger (11) für den Lichtempfänger (4) angeordnet ist und/oder ein Optikträger (11) für den Lichtsender (3) und den Lichtempfänger (4) angeordnet ist, wobei der Optikträger (11) für den Lichtsender (3) zwischen Lichtsender (3) und Frontscheibe (8) angeordnet ist, der Optikträger (11) für den Lichtempfänger (4) zwischen dem Lichtempfänger (4) und der Frontscheibe (8) angeordnet ist und/oder der Optikträger (11) für den Lichtsender (3) und den Lichtempfänger (4) zwischen dem Lichtsender (3), dem Lichtempfänger (4) und der Frontscheibe (8) angeordnet ist, wobei an dem Optikträger (11) für den Lichtsender (3), an dem Optikträger (11) für den Lichtempfänger (4) und/oder an dem Optikträger (11) für den Lichtsender (3) und den Lichtempfänger (4) das zylinderförmige elastische Ausgleichselement (5) angeordnet ist.

6. Optoelektronischer Sensor (1) nach einem der vorhergehenden Ansprüche, **dadurch gekennzeichnet, dass** das elastische Ausgleichselement (5) aus dunklem, insbesondere schwarzem Material gebildet ist und eine matte Oberfläche (12) an mindestens einer Innenwand (13) aufweist.

7. Optoelektronischer Sensor (1) nach einem der vorhergehenden Ansprüche, **dadurch gekennzeichnet, dass** das elastische Ausgleichselement (5) eine Faltenbalgstruktur (14) aufweist.

8. Optoelektronischer Sensor (1) nach einem der vorhergehenden Ansprüche, **dadurch gekennzeichnet, dass** das zylinderförmige elastische Ausgleichselement (5) im Querschnitt rund, eckig, oval, elliptisch ist oder eine Freiform aufweist.

9. Optoelektronischer Sensor (1) nach einem der vorhergehenden Ansprüche, **dadurch gekennzeichnet, dass** das zylinderförmige elastische Ausgleichselement (5) eine konische Form oder eine Kegelform aufweist.

10. Optoelektronischer Sensor (1) nach einem der vorhergehenden Ansprüche, **dadurch gekennzeichnet, dass** das zylinderförmige elastische Ausgleichselement (5) einstückig ausgebildet ist.

11. Optoelektronischer Sensor (1) nach einem der vorhergehenden Ansprüche, **dadurch gekennzeichnet, dass** das zylinderförmige elastische Ausgleichselement (5) stoffschlüssig mit der Frontscheibe (8) verbunden ist.

12. Optoelektronischer Sensor (1) nach einem der vorhergehenden Ansprüche, **dadurch gekennzeichnet, dass** das zylinderförmige elastische Ausgleichselement (5) formschlüssig mit der Frontscheibe (8) verbunden ist.

13. Optoelektronischer Sensor (1) nach Anspruch 5, **dadurch gekennzeichnet, dass** das zylinderförmige elastische Ausgleichselement stoffschlüssig mit dem Optikträger verbunden ist.

14. Optoelektronischer Sensor (1) nach Anspruch 5, **dadurch gekennzeichnet, dass** das zylinderförmige elastische Ausgleichselement (5) formschlüssig mit dem Optikträger (11) verbunden ist.

15. Optoelektronischer Sensor (1) nach einem der vorhergehenden Ansprüche,
**dadurch gekennzeichnet, dass** das zylinderförmige elastische Ausgleichselement (5) stoffschlüssig mit einer Leiterplatte (15) verbunden ist, wobei auf der Leiterplatte (15) der Lichtsender (3) und der Lichtempfänger (4) angeordnet ist.

16. Optoelektronischer Sensor (1) nach Anspruch 1, **dadurch gekennzeichnet, dass** das zylinderförmige elastische Ausgleichselement (5) formschlüssig mit einer Leiterplatte (15) verbunden ist, wobei auf der Leiterplatte (15) der Lichtsender (3) und der Lichtempfänger (4) angeordnet ist.

17. Optoelektronischer Sensor (1) nach einem der vorhergehenden Ansprüche,
**dadurch gekennzeichnet, dass** das zylinderförmige elastische Ausgleichselement (5) eine integrierte Blende (16) aufweist.

18. Optoelektronischer Sensor (1) nach Anspruch 5, **dadurch gekennzeichnet, dass** das zylinderförmige elastische Ausgleichselement (5) zwischen einer Leiterplatte (15) und dem Optikträger (11) angeordnet ist.
